# EUROPÄISCHE PATENTANMELDUNG

(11) **EP 3 498 402 A1**
(43) Veröffentlichungstag der Anmeldung: **19.06.2019**
(21) Anmeldenummer: 18209144.7
(22) Anmeldetag: 29.11.2018
(51) Int. Cl.: B22F 3/105, B33Y 10/00, B33Y 30/00, B33Y 50/02, B23K 26/342, B23K 26/70, B29C 64/153

(54) **VERFAHREN ZUR BEEINFLUSSUNG DER MIKROSTRUKTUR EINES ZUSATZWERKSTOFFGEFÜGES EINES ZUSATZWERKSTOFFS, DER BEIM SCHICHTWEISEN LASERAUFTRAGSSCHWEISSEN AUF EIN SUBSTRAT ODER MINDESTENS EINER BEREITS AUFGEBRACHTEN SCHICHT DES ZUSATZ-WERKSTOFFS UND/ODER DER VERMEIDUNG EINER RANDZONENVERSPRÖDUNG VON DABEI AUFGETRAGENEM ZUSATZWERKSTOFF**

(30) Priorität: 15.12.2017 DE 102017222888
(71) Anmelder: FRAUNHOFER-GESELLSCHAFT zur Förderung der angewandten Forschung e.V., 80686 München (DE); Technische Universität Dresden, 01069 Dresden (DE)
(72) Erfinder: Seidel, André, 01097 Dresden (DE); Finaske, Thomas, 01219 Dresden (DE); Brückner, Frank, 01217 Dresden (DE)
(74) Vertreter: Pfenning, Meinig & Partner mbB

(57) **Zusammenfassung**

Verfahren zur Beeinflussung der Mikrostruktur eines Zusatzwerkstoffgefüges eines Zusatzwerkstoffs, der beim schichtweisen Laserauftragsschweißen auf ein Substrat oder mindestens einer bereits aufgebrachten Schicht des Zusatzwerkstoffs und/oder der Vermeidung einer Randzonenversprödung von dabei aufgetragenem Zusatzwerkstoff, bei dem Zusatzwerkstoff schichtförmig durch Aufschmelzen und mit Ausbildung einer Schicht auf eine Oberfläche aufgetragen und auf den bereits erstarrten Zusatzwerkstoff ein kryogenes Gas allein oder ein kryogenes Gas mit einem Gas als Gasgemisch gerichtet wird. Es kann auch während einer spanenden Bearbeitung an Oberflächen von Schichten auf die Oberfläche ein kryogenes Gas oder ein Gasgemisch gerichtet werden. Dabei wird die mit dem kryogenen Gas oder Gasgemisch bestrahlte Größe der Oberfläche und/oder der dabei eingesetzte Volumenstrom in Abhängigkeit der momentanen Temperaturdifferenz zwischen dem Substratwerkstoff und dem Zusatzwerkstoff einer auf der Substratoberfläche ausgebildeten Schicht oder in Abhängigkeit der momentanen Temperaturdifferenz zwischen dem zuletzt aufgetragenen Zusatzwerkstoff und bereits erstarrtem Zusatzwerkstoff mindestens einer vorab aufgetragenen Schicht geregelt werden.

## Beschreibung

Die Erfindung betrifft ein Verfahren zur Beeinflussung der Mikrostruktur eines Zusatzwerkstoffgefüges eines Zusatzwerkstoffs, der beim schichtweisen Laserauftragsschweißen auf ein Substrat oder mindestens einer bereits aufgebrachten Schicht des Zusatzwerkstoffs und/oder der Vermeidung einer Randzonenversprödung von dabei aufgetragenem Zusatzwerkstoff.

Dabei werden üblicherweise pulver- und/oder drahtförmige Zusatzwerkstoffe eingesetzt, um Schichten auf Substratoberflächen auszubilden. Das Laserauftragsschweißen wird auch für eine additive Herstellung dreidimensionaler Bauteile eingesetzt. Dabei werden mehrere Schichten übereinander ausgebildet.

Je nach Volumen und Werkstoff des eingesetzten und mit einem Laserstrahl aufgeschmolzenen Zusatzwerkstoffs kommt es dabei zu einer relativ unbeeinflussten Gefügebildung des erstarrten Zusatzwerkstoffs. Außerdem können sich eutektische Phasen bilden und Bestandteil des Gefüges werden. All dies beeinflusst die Eigenschaften eines so hergestellten Bauteils.

Bei der Gefügebildung während des Erstarrens haben natürlich auch die Temperaturen und die eingetragene Energiemenge einen Einfluss. So spielen auch die Temperatur eines Substrates und/oder die Leistungsdichte im Brennfleck des jeweiligen Laserstrahls eine Rolle bei der Gefügebildung. Die Leistungsdichte wird durch die Leistung des Laserstrahls, die Größe und Form seines Brennflecks auf der jeweiligen bestrahlten Oberfläche und die Vorschubgeschwindigkeit seiner Bewegung beeinflusst. Dabei sind aber Grenzen gesetzt, da der jeweilige Zusatzwerkstoff möglichst vollständig aufgeschmolzen werden soll, um ihn maximal ausnutzen zu können.

Insbesondere bei der additiven Fertigung dreidimensionaler Bauteile durch Laserauftragsschweißen tritt das Problem der Randzonenversprödung auf. Dieses wird zusätzlich durch die nachfolgend erforderliche spanende Bearbeitung der Oberflächen verschärft, da auch dadurch eine Erwärmung des Zusatzwerkstoffs erfolgt, die in der Regel unbeeinflusst bleibt. Die spanende Bearbeitung der Oberflächen erfolgt üblicherweise durch Fräsen und/oder Schleifen. Bei rotationssymmetrischen Oberflächen kann auch ein Drehen durchgeführt werden, um die Oberflächengüte und die erforderliche Konturgenauigkeit der jeweiligen Oberflächen zu erreichen.

Es ist daher Aufgabe der Erfindung, Möglichkeiten für eine verbesserte gezielte Beeinflussung der Mikrostruktur des Gefüges von mittels Laserauftragsschweißen auf eine Substratoberfläche aufgetragenem Zusatzwerkstoff und/oder die Vermeidung einer Randzonenversprödung anzugeben.

Erfindungsgemäß wird diese Aufgabe mit einem Verfahren, das die Merkmale des Anspruchs 1 aufweist, gelöst. Vorteilhafte Ausgestaltungen und Weiterbildungen der Erfindung können mit in untergeordneten Ansprüchen bezeichneten Merkmalen realisiert werden.

Bei dem erfindungsgemäßen Verfahren wird Zusatzwerkstoff schichtförmig durch Aufschmelzen mit der Energie eines Laserstrahls aufgeschmolzen. Mit Ausbildung einer Schicht auf einer Substratoberfläche oder einer Oberfläche einer bereits erstarrten mit dem Zusatzwerkstoff gebildeten Schicht, wird ein kryogenes Gas allein oder ein kryogenes Gas mit einem Inertgas oder einem reaktiven Gas als Gasgemisch auf die jeweilige Schicht des Zusatzwerkstoffs gerichtet.

Allein oder zusätzlich dazu wird während einer spanenden Bearbeitung an Oberflächen einer oder mehrerer mit dem Zusatzwerkstoff gebildeter Schicht(en) auf die Oberfläche ein kryogenes Gas allein oder ein kryogenes Gas mit einem Inertgas oder einem reaktiven Gas als Gasgemisch gerichtet.

In beiden Alternativen wird dabei die mit dem kryogenen Gas oder dem Gasgemisch bestrahlte Größe der Oberfläche und/oder der dabei eingesetzte Volumenstrom in Abhängigkeit der momentanen Temperaturdifferenz zwischen dem Substratwerkstoff und dem Zusatzwerkstoff einer auf der Substratoberfläche ausgebildeten Schicht oder in Abhängigkeit der momentanen Temperaturdifferenz zwischen dem zuletzt aufgetragenen Zusatzwerkstoff und bereits erstarrtem und kristallisiertem Zusatzwerkstoff mindestens einer vorab aufgetragenen Schicht geregelt.

Beim Laserauftragsschweißen kann die Erstarrungsgeschwindigkeit des aufgetragenen Zusatzwerkstoffs beeinflusst werden, um gezielt eine Mikrostruktur des Gefüges des erstarrten Zusatzwerkstoffs zu erhalten.

So kann beispielsweise die mit dem kryogenen Gas oder dem Gasgemisch beeinflusste Größe der Oberfläche verkleinert und/oder der Volumenstrom vergrößert werden, um stängelkristallin orientierte Kristallite im Gefüge des aufgetragenen Zusatzwerkstoffs auszubilden.

Es kann aber auch durch die Zusammensetzung eines Gasgemisches Einfluss auf die Gefügebildung bzw. die Randzonenversprödung genommen werden. So führt ein höherer Anteil an Inertgas oder reaktivem Gas in einem Gasgemisch zu höheren Temperaturen, so dass der Kühleffekt dadurch kleiner wird.

In gleicher Weise reduziert sich auch der mechanische Einfluss der Strömung des Gasgemisches, da ja bei der Sublimation eine kleinere Volumenvergrößerung zu verzeichnen ist.

Stängelkristallin orientierte Kristallite können so insbesondere durch die Einstellung des Temperaturgradienten ausgebildet werden. In Abhängigkeit der Erstarrungsgeschwindigkeit erstarren diese dendritisch, zellular oder planar.

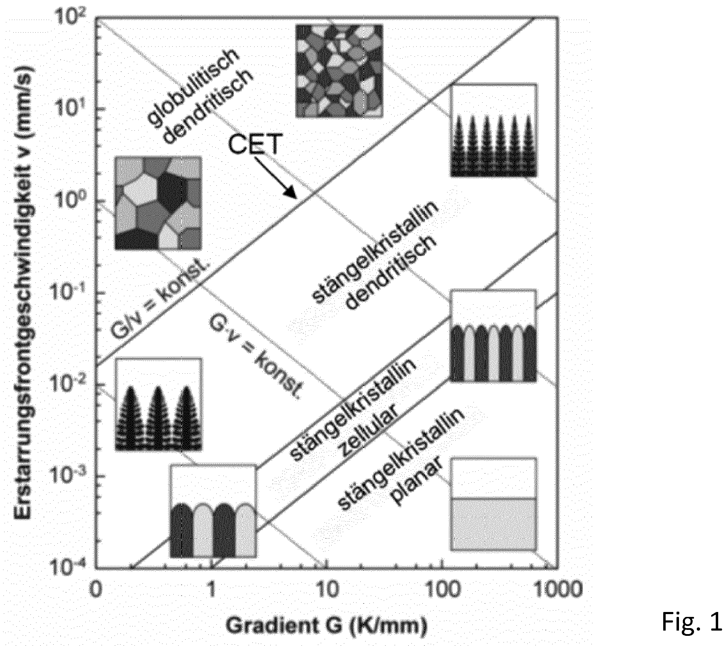

Auf der Grundlage einer hohen Erstarrungsgeschwindigkeit (Größenordnung > 10⁻³ mm/s) lässt sich die Modifikation der Mikrostruktur durch die Erhöhung des Temperaturgradienten erreichen. Eine Verschiebung von 0 K/mm nach > 250 K/mm führt zu einer Veränderung der Mikrostruktur von stängelkristallin dendritisch nach stängelkristallin planar und fällt somit in den Wirkungsbereich der kryogenen Flüssigkeiten (z.B Helium) gemäß Tabelle 1. Dabei kann der Sachverhalt von Figur 1 berücksichtigt werden.

Eine spanende Bearbeitung an Oberflächen von aufgetragenem und erstarrtem Zusatzwerkstoff kann nach dem Auftrag einer Schicht oder dem Auftrag von maximal zwanzig nacheinander und übereinander ausgebildeten Schichten durchgeführt werden.

Beim Laserauftragsschweißen wird mit einem Laserstrahl als äußere Energiequelle unter Zuführung von Zusatzwerkstoff (Pulver und/oder Draht) eine auf einem Substrat (gekühlt oder vorgewärmt) metallurgisch fest haftende Schicht erzeugt. Der Zusatzwerkstoff wird dabei auf Liquidustemperatur erhitzt und bildet eine Grenzfläche zur Prozessgasatmosphäre. Die Prozessgasatmosphäre kann durch die hybride Anwendung von gasförmigen und kryogenen Prozessgasen (inert und/oder aktiv) hinsichtlich Temperatur und/oder chemischer Zusammensetzung gezielt eingestellt werden.

Die Verwendung kryogener Gase erschließt dabei den Bereich der tiefen Temperaturen (z.B. Kohlenstoffdioxid, Sublimationstemperatur 194,5 K = -78,5 °C oder Argon (Siedetemperatur 87,15 K = -185,8 °C). In Kombination mit einer gezielten Temperierung des Substratwerkstoffs lassen sich bei einer geeigneten Prozessführung Temperaturgradienten gezielt anpassen. Auf dieser Grundlage kann eine gezielte Einstellung der Mikrostruktur des Gefüges des erstarrten Zusatzwerkstoffes erreicht werden.

So ist aus dem in Figur 1 gezeigten Diagramm die Erstarrungsmorphologie in Abhängigkeit des Temperaturgradienten G und der Geschwindigkeit der Erstarrungsfront V erkennbar.

Ein weiterer Aspekt ist die gezielte Ausnutzung der Volumenexpansion bei der Änderung des Aggregatzustandes eines kryogenen Gases (siehe Tabelle 1).

**Tabelle 1: Eigenschaften ausgewählter kryogener Flüssigkeiten**

| Gas | Siedetemperatur °C | Volumenvergrößerung beim Phasenübergang flüssig zu gasförmig |
|---|---|---|
| Helium | - 268,9 | 1 - 757 |
| Wasserstoff | - 252,7 | 1 - 851 |
| Stickstoff | - 195,8 | 1 - 696 |
| Fluor | - 187,0 | 1 - 888 |
| Argon | - 185,7 | 1 - 847 |
| Sauerstoff | - 183,0 | 1 - 860 |

Durch gezielte Auswahl eines kryogenen Gases und seiner Einsatztemperatur beim Anströmen auf die jeweilige Oberfläche kann eine gezielte Modifikation der Erstarrungsmorphologie mit einer Prozessgasabschirmung durch Volumenexpansion des kryogenen Gases kombiniert werden. Dies kann mit einem entsprechend modifizierten Bearbeitungskopf für das Laserauftragsschweißen erreicht werden. Der Bearbeitungskopf sollte so ausgebildet sein, dass mit dem kryogenen Gas oder dem Gasgemisch eine Art Glocke auf der Oberfläche eines Schmelzbades des Zusatzwerkstoffs ausgebildet wird. Dabei sollte die Fläche der Oberfläche des Schmelzbades die so angeströmt wird, variiert werden können. Auch eine Regulierung bzw. Steuerung des Volumenstroms sollte möglich sein. Vorteilhaft wäre auch eine mögliche Veränderung der Geometrie der angeströmten Fläche des Schmelzbades. Dadurch kann eine Anpassung an das Erstarrungsverhalten über die Fläche und/oder das Volumen des erstarrenden Zusatzwerkstoffes vorgenommen werden.

Als reaktive Gase in einem Gasgemisch kann man beispielsweise Kohlenstoffdioxid (Argon - Kohlenstoffdioxid - Sauerstoff) oder (Argon - Kohlenstoffdioxid) oder Stickstoff (Helium - Stickstoff) einsetzen.

Bei der hybriden Kombination des generativen Auftragsschweißens mit der Fräsbearbeitung als spanende Bearbeitung können durch die Zwischenbearbeitung häufig signifikante Verbesserungen bei der Prozessperformance erzielt werden. Der lagenweise additive schichtweise Aufbau mit dem Zusatzwerkstoff wird dabei unterbrochen um das Bauteil spanend zu bearbeiten. Aufgrund des vorherigen Energieeintrags durch den Laserstrahl ist die Bauteiltemperatur variabel, jedoch erhöht gegenüber der Umgebungsluft. Mit dem Beginn der anschließenden Spanabnahme (Fräsen) steigt die Temperatur in der Wechselwirkungszone zwischen Werkzeug (Fräswerkzeug) und Werkstück an. Hochleistungswerkstoffe, wie z.B. Titan oder Titanbasislegierungen zeigen bei entsprechenden Temperaturen eine hohe Neigung zur Randschichtversprödung (alpha case). Die Versprödung beginnt oberhalb einer metall- oder legierungsabhängigen Grenztemperatur und nimmt mit dem Temperatur und der Expositionszeit zu (siehe Tabelle 2).

**Tabelle 2 betrifft die Dicke von Oxidschichten auf Oberflächen aus reinem Titan als Funktion der Temperatur bei einer Erwärmung über einen Zeitraum von 30 min an Luft.**

| **Temperatur** | | **Messbare Dicke** | |
|---|---|---|---|
| °C | °F | **mm** | **ln.** |
| 315 | 600 | None | None |
| 425 | 800 | None | None |
| 540 | 1000 | None | None |
| 650 | 1200 | < 0,005 | < 0,0002 |
| 705 | 1300 | 0,005 | 0,0002 |
| 760 | 1400 | 0,008 | 0,0003 |
| 815 | 1500 | < 0,025 | < 0,001 |
| 870 | 1600 | < 0,025 | < 0,001 |
| 925 | 1700 | < 0,05 | < 0,002 |
| 980 | 1800 | 0,05 | 0,002 |
| 1040 | 1900 | 0,10 | 0,004 |

Zur Vermeidung einer Überschreitung der Grenztemperatur kann geeignetes Kühlmittel (kryogenes Gas oder Gasgemisch) eingesetzt werden. Aufgrund des auf die Zwischenbearbeitung folgenden, erneuten lagenweisen additiven Materialaufbaus ergeben sich zusätzliche Restriktionen für das potenzielle Kühlmittel da die Oberfläche metallisch blank und frei von Fett, Schmutz oder Rost sein muss, um eine Haftung, Oxidation oder chemische Reaktionen zu vermeiden. Dadurch scheiden konventionelle Kühlmittel eigentlich aus.

Eine hohe Eignung bietet der Einsatz von kryogenen Gasen. Wird zum Beispiel unter Druck verflüssigtes Kohlenstoffdioxid in der Wechselwirkungszone entspannt, entsteht Trockeneis. Dieses führt zu einer Temperaturänderung in der Wechselwirkungszone von festem Werkstoff und Gas. Ein wesentlicher Vorteil für die Zwischenbearbeitung ist der Umstand, dass Trockeneis unter Normaldruck bei -78,48 °C sublimiert, also direkt in die Gasphase übergeht, ohne vorher zu schmelzen. Dadurch wird eine Kontamination des Bauteils vermieden und der anschließende additive Aufbau ohne eine zusätzliche Reinigung des Bauteils ermöglicht. Ein weiterer Vorteil ist die prozessinhärente Trennung von Kühlmittel (z.B. sublimiertes CO₂) und Zusatzwerkstoff, der keine chemische Verbindung mit dem kryogenen Gas eingeht und somit nicht getrennt werden muss.

Alternativ kann auch ein anderes, insbesondere kryogenes Inertgas Verwendung finden.

Hierdurch lassen sich einzeln, oder in Kombination:
- Die Oxidation verhindern,
- Gewährleisten das auch nach der Zwischenbearbeitung die Oberfläche metallisch blank und frei von Fett, Schmutz oder Rost ist,
- Die Vermischung von Zusatzwerkstoff (z.B. Pulver) und Kühlmittel verhindern was das Recycling bzw. die Rezyklierung des Zusatzwerkstoffs ermöglicht und Ressourcen schont.

Das beschriebene Verfahren betrifft die mögliche kombinierte Anwendung des kryogen gestützen Laserauftragsschweißens und der kryogenen Zwischenbearbeitung mittels Fräsen. Die Kombination kann dabei seriell oder parallel sein. Die Anwendung kann weiterhin in einer Maschine oder Anlage (z.B. Bearbeitungszentrum) oder auch mit getrennten Handlingsystemen erfolgen (z. B. Doppel-Robotersystem) die wiederum seriell oder parallel eingesetzt werden können.

Bei einem Ausführungsbeispiel wurden auf einem gegossenen Substrat Bereiche (Spuren) mit einem Laser zugeführter Zusatzwerkstoff unter Variation der Vorschubgeschwindigkeit lokal umgeschmolzen. Ziel war die lokale Modifikation der Mikrostruktur des Gefüges.

Bei einer Schmelzbaderzeugung durch Laser-Strahlquellen mit hoher Leistung ergeben sich bei hohen Vorschubgeschwindigkeiten geringe Energieeinträge entlang der Vorschubbewegung des Laserstrahlbrennflecks, was bei einem geringen Strahlquerschnitt eine schlanke Kontur der Schweißnähte und eine schmale Wärmeeinflusszone zur Folge hat.

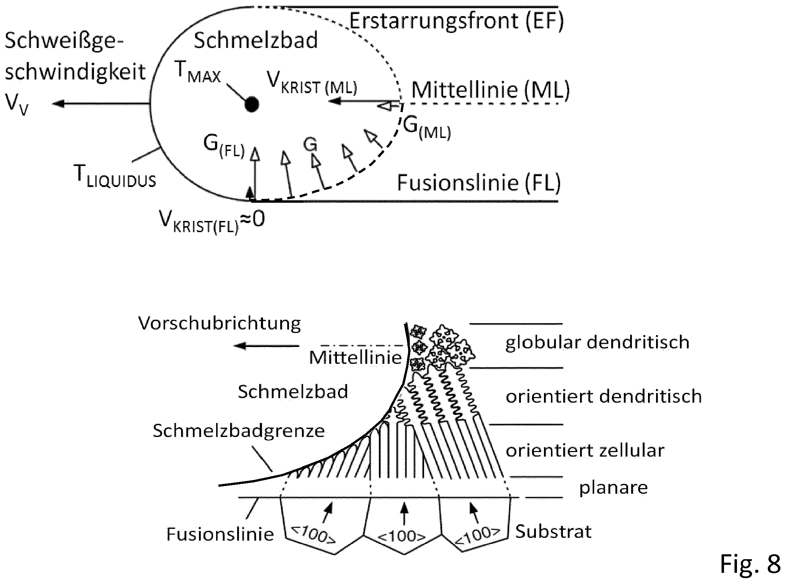

Dabei variieren der Temperaturgradient G und die Geschwindigkeit der Erstarrungsfront V_{Krist} - in Abhängigkeit der Position im Schmelzbad bzw. dessen Orientierung zur Vorschubbewegungsrichtung des Brennflecks des Laserstrahls, woraus eine ortsabhängige Morphologie des erstarrten Gefüges resultiert (siehe Figur 8). Ohne eine gezielte Temperaturführung ergibt sich an der Fusionslinie ein hoher Temperaturgradient der in Richtung des bereits erstarrten, noch warmen Zusatzwerkstoffs abnimmt. Durch die Vorschubbewegung des Brennflecks erhöht sich die Kristallisationsgeschwindigkeit von der Fusionslinie zur Mittellinie des aufgetragenen Zusatzwerkstoffs, woraus ein von der Fusionslinie zur Mittellinie in der Reihenfolge planar, zellular, dendritisch und globular dendritisch ausbildendes Gefüge ausgebildet werden kann.

Eine weitere Möglichkeit der Einflussnahme bildet die Anpassung des Volumenstromes mit dem kryogenen Gas oder dem Gasgemisch auf eine Schmelze und den erstarrenden Zusatzwerkstoff gerichtet wird.

Beginnend mit der zellularen Erstarrung des Zusatzwerkstoffs nimmt die konstitutionelle Unterkühlung bis in den Bereich der globular dendritischen Erstarrung immer weiter zu, wodurch sich niedrigschmelzende und eutektische Phasen im interdendritischen Zwischenraum anreichern können. Diese stellen häufig eine Schwachstelle im Schweißgut dar und sollten mit der Erfindung vermieden werden können.

Ziel ist es, die Verhinderung/Reduzierung der Anreicherung niedrigschmelzender Phasen. Das Ideal wäre dabei eine vollständige planare Erstarrung des zuvor geschmolzenen Zusatzwerkstoffes. Die reine Erhöhung der Substrattemperatur ist dabei mit einer Energiequellenkombination (z. B. Induktion + Laserstrahl) technisch leicht umsetzbar.

Die Verwendung kryogener Gase (siehe Tabelle 1) kann nun einen entscheidenden Beitrag zur Erhöhung des Temperaturgradienten leisten und die Herstellung einkristalliner Schichten ermöglichen. Durch die Verwendung kryogener Inertgase kann zusätzlich die Kontamination des geschmolzenen Zusatzwerkstoffs verhindert werden.

Nachfolgend soll die Erfindung beispielhaft näher erläutert werden.

Dabei zeigen:
Figur 1 ein Diagramm des Verhältnisses der Erstarrungsfrontgeschwindigkeit vom Temperaturgradienten G (in K/mm) für Titan als Zusatzwerkstoff;
Figur 2 in schematischer Form einen Aufbau, wie er beim Laserauftragsschweißens einsetzbar ist;
Figur 3 eine schematische Darstellung einer fortschreitenden Ausbildung einer Schicht auf einer Substratoberfläche mittels Laserauftragsschweißen in einer perspektivischen Darstellung;
Figur 4 eine schematische Darstellung einer fortschreitenden Ausbildung einer Schicht auf einer Substratoberfläche mittels Laserauftragsschweißen in einer Seitenansicht;
Figur 5 eine schematische perspektivische Darstellung eines dreidimensionalen Schichtaufbaus, der mit Zusatzwerkstoff durch Laserauftragsschweißen auf einer Substratoberfläche schichtweise ausgebildet worden ist;
Figur 6 eine schematische perspektivische Darstellung eines dreidimensionalen Schichtaufbaus, der mit Zusatzwerkstoff durch Laserauftragsschweißen auf einer Substratoberfläche ausgebildet worden ist, bei einer Fräsbearbeitung an seiner Oberfläche;
Figur 7 ein Werkstück in verschiedenen Bearbeitungsstufen und
Figur 8 Änderungen des Temperaturgradienten G und der Geschwindigkeit der Erstarrungsfront V_{KRIST} von der Fusionslinie zur Mittellinie an der Erstarrungsfront zwischen Schmelzbad und erstarrtem Zusatzwerkstoff und (rechts) die Änderung der Mikrostruktur des Gefüges durch die Änderung des Temperaturgradienten G und der Geschwindigkeit der Erstarrungsfront V_{KRIST}.

Bei allen nachfolgenden beschriebenen Beispielen kann anstelle eines kryogenen Gases allein auch ein Gasgemisch, gemäß dem allgemeinen Teil der Beschreibung eingesetzt werden.

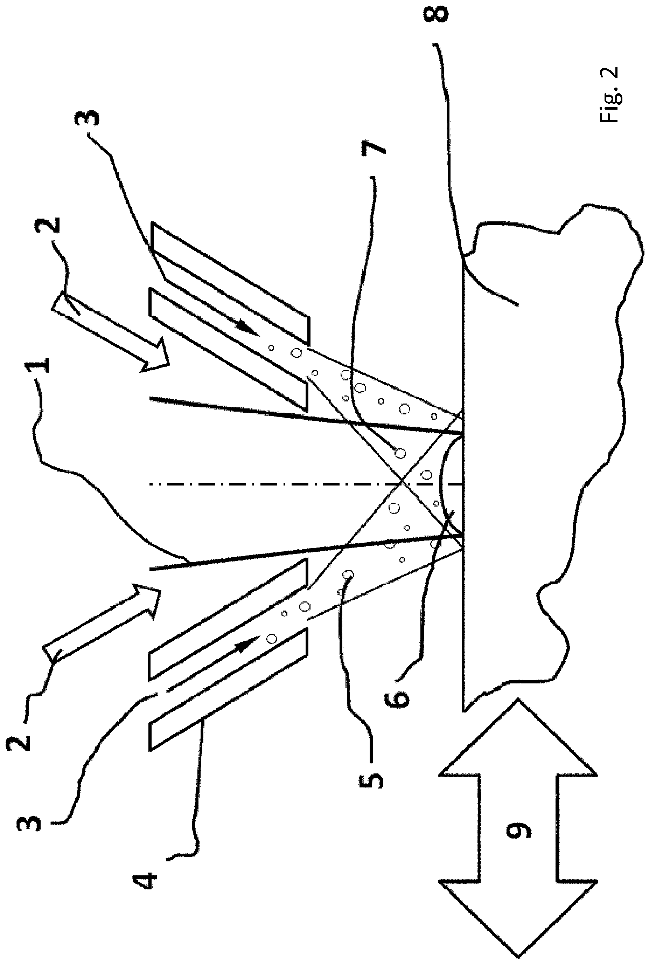

Mit einem Laserstrahl 1 wird zugeführter Zusatzwerkstoff 3 (Pulver und/oder Draht) in einer Wechselwirkungszone 7 aufgeschmolzen und eine auf einer Oberfläche eines Substrats 8 (gekühlt oder vorgewärmt) metallurgisch fest haftende Schicht ausgebildet. In Figur 2 ist ein Beispiel für das induktionsgestützte Laser-Pulver-Auftragsschweißen gezeigt. Dabei wird das Substrat 8 extern mit einer äußeren Temperaturquelle 9, insbesondere induktiv erwärmt und auf einer bestimmten Temperatur gehalten, die die Temperaturdifferenz zwischen Substratwerkstoff und dem mit dem Zusatzwerkstoff 3 gebildeten Schmelzbad 6 beeinflusst. Über eine Zuführung im in Figur 2 gezeigten Laserbearbeitungskopf 4 strömt kryogenes Gas 2 allein oder als Gemisch mit einem Inertgas auf die Oberfläche des gebildeten Schmelzbades 6 und die daneben angeordneten Oberflächenbereiche des Substrats 8. Dadurch kann die Erstarrungsgeschwindigkeit unter Berücksichtigung der jeweiligen Temperaturdifferenzen beeinflusst werden. Die Zufuhr des kryogenen Gases oder Gasgemisches kann definiert in Abhängigkeit der Temperaturdifferenzen geregelt werden. Dies kann die geregelte Gaszusammensetzung und insbesondere den Volumenstrom betreffen. Mit den geregelt beeinflussten Temperaturdifferenzen kann die Geschwindigkeit mit der sich die Erstarrungsfront von außen bis in das Zentrum des Schmelzbades 6 bewegt und damit die Gefügebildung des erstarrenden Zusatzwerkstoffes beeinflusst werden.

Dieses Vorgehen kann analog auch bei einer auf einer bereits auf einer Substratoberfläche ausgebildeten Zusatzwerkstoffschicht, auf die mindestens eine weitere Schicht aufgebracht werden soll, angewendet werden.

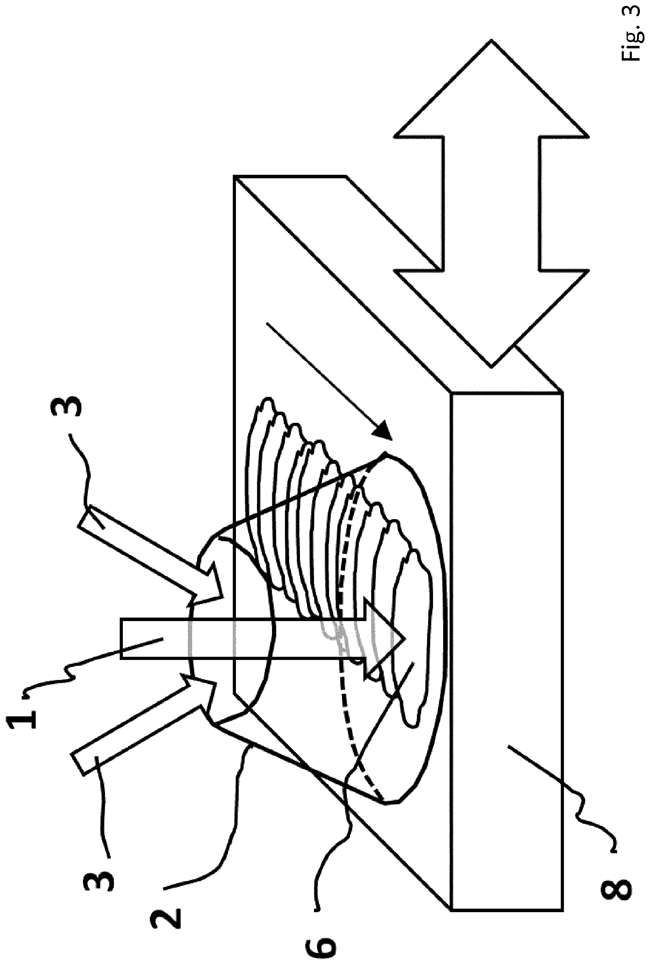

Mit Figur 3 wird verdeutlicht, wie eine Schicht auf einer Substratoberfläche durch Bewegung des Brennflecks des Laserstrahls 1 entlang einer Vorschubbewegungsrichtung ausgebildet wird. Dabei wird mit kryogenem Gas 2 eine Strömung auf das gebildete Schmelzbad 6 in Form einer Glocke gerichtet, so dass kryogenes Gas auf eine Fläche, die größer als die jeweilige momentane Fläche eines Schmelzbades 6 ist, gerichtet ist. Außerhalb der so beströmten Fläche ist der Zusatzwerkstoff in Form einer Schicht bereits erstarrt.

Mit dem Volumenstrom an kryogenem Gas und/oder der Größe der Fläche auf die die Strömung des kryogenen Gases 2 auftrifft, kann die Erstarrungsfrontgeschwindigkeit im Schmelzbad 6 und damit die sich ausbildende Mikrostruktur des Zusatzwerkstoffgefüges der Schicht beeinflusst werden.

Durch den Vorschub während des Zusatzwerkstoffauftrags verschiebt sich das Temperaturmaximum (Schmelzbad) gegenüber dem darunter liegenden Substrat 8. Betrachtet man diesen Sachverhalt am Beispiel des exemplarisch gewählten Werkstoffs Titan, dann ergeben sich nach Figur 1 die Bereiche des Schmelzbades 6 (Werkstofftemperatur größer als die Schmelztemperatur), der Bereich des erstarrten aber noch warmen und reaktiven Schmelzgutes und des erstarrten, noch warmen aber nicht mehr reaktiven Schmelzgutes, die sich in lateraler und vertikaler Richtung superpositionieren.

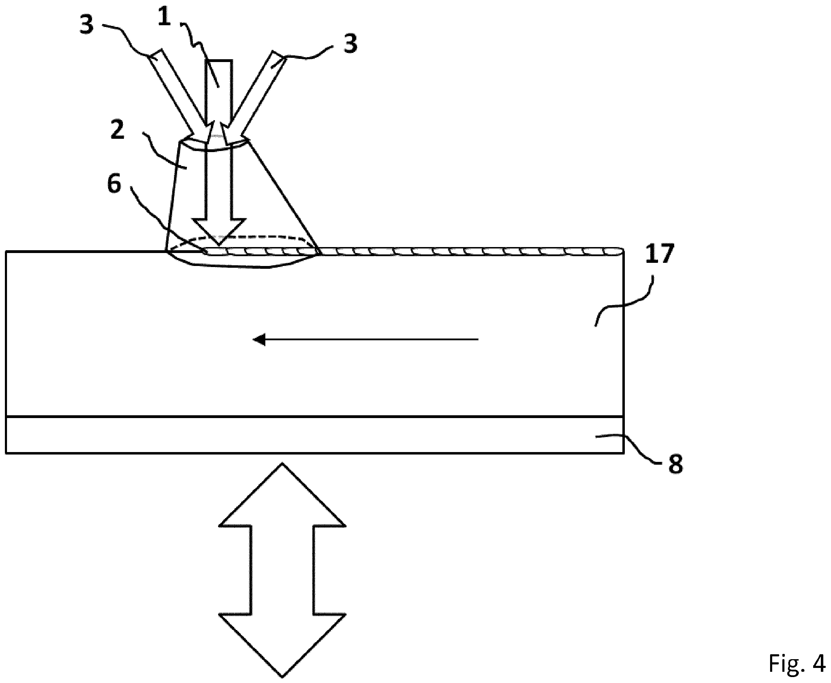

Mit der Seitenansicht von Figur 4 kann man erkennen, dass Zusatzwerkstoff auch schichtweise übereinander auf der Oberfläche eines Substrates 8 aufgetragen werden kann. Es ist dort gezeigt, wie Zusatzwerkstoff als oberste Schicht auf einen aus mehreren übereinander angeordneten Schichten gebildeten Schichtaufbau aufgetragen werden kann.

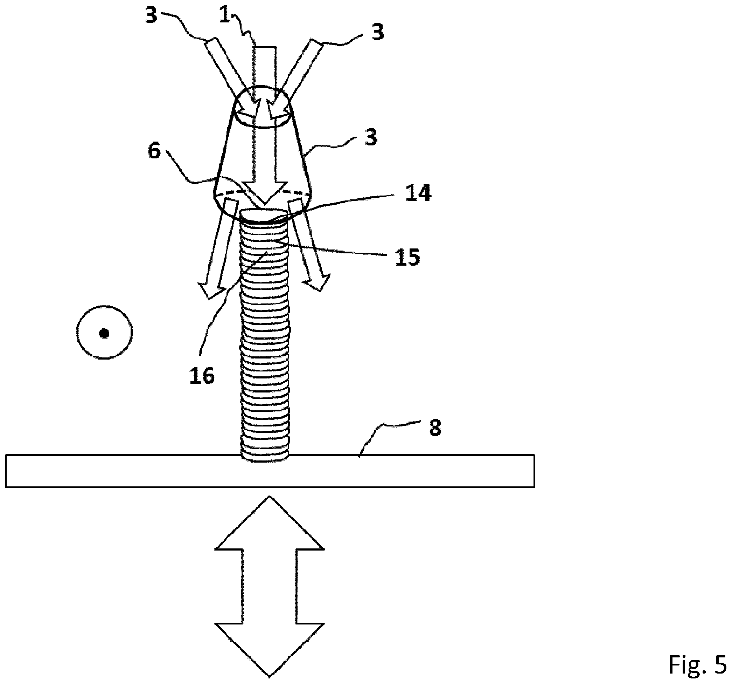

Dies wird für eine dreidimensionale Ausbildung auf einer Substratoberfläche auch aus Figur 5 erkennbar. Dabei wird eine Wand oder eine Säule aus Zusatzwerkstoff mit mehreren übereinander ausgebildeten Einzelschichten aus dem Zusatzwerkstoff auf der Substratoberfläche ausgebildet. Kryogenes Gas 2 strömt dabei auf die nach oben weisende Oberfläche der obersten Schicht und entlang der Seitenwände und kann so das Abkühlverhalten des Zusatzwerkstoffes und dadurch auch die sich ausbildende Mikrostruktur seines Gefüges beeinflussen.

Dabei sind drei Zonen 14, 15 und 16 im Schichtaufbau für Titan als Zusatzwerkstoff eingezeichnet. Zone 15 ist ein Bereich in dem Temperaturen im Bereich von 540 °C - 980 °C (Oxidschichtdicke ohne Abschirmung im Bereich der dritten Nachkommastelle bis zur zweiten Nachkommastelle) und in Zone 14 im Temperaturbereich > 980 °C (Oxidschichtdicke ohne Abschirmung im Bereich der ersten Nachkommastelle) kenntlich gemacht. Zone 16 umfasst alle Bereiche mit einer Temperatur kleiner 540 °C (keine Oxidschichtbildung). Zur Verhinderung der Oxidation kommt eine angepasste Schutzgasführung zum Einsatz (vgl. Abbildung 2, 3 und 4). Im vorliegenden Verfahren wird die Prozessgasatmosphäre durch die hybride Anwendung von gasförmigen und kryogenen Prozessgasen (inert und/oder aktiv) hinsichtlich der Temperatur von Zusatzwerkstoff und Substratwerkstoff und/oder chemischer Zusammensetzung gezielt eingestellt.

Hierdurch lassen sich einzeln, oder in Kombination:
- Die Oxidation verhindern,
- Temperaturgradienten und Erstarrungsgeschwindigkeit gezielt einstellen,
- Die Phasenumwandlung zweiter Ordnung (fest-fest) beeinflussen,
- Sowie eine In-situ Legierung des Schmelzgutes erreichen.

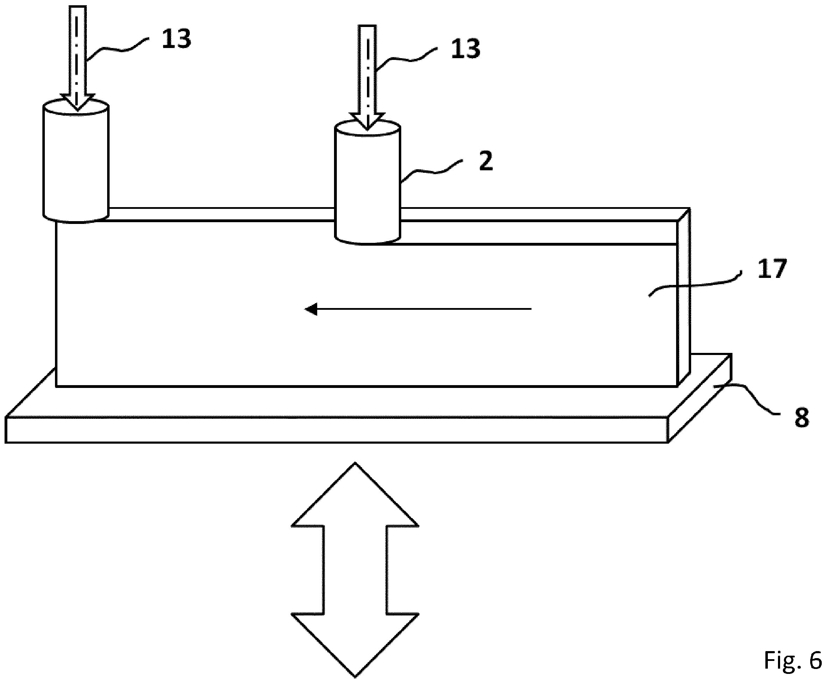

Figur 6 zeigt eine Fräsbearbeitung an Oberflächen eines Schichtaufbaus auf einer Substratoberfläche. Dabei werden Oberflächen des Schichtaufbaus aus dem aufgetragenen Zusatzwerkstoff mit Fräswerkzeugen 13 spanend bearbeitet.

In dem Verfahren kann/muss der lagenweise additive schichtweise Werkstoffaufbau unterbrochen werden um das Werkstück 17 spanend zu bearbeiten. Aufgrund des vorherigen Energieeintrags mit dem Laserstrahl ist die Substrattemperatur variabel, jedoch erhöht gegenüber der Umgebungsluft. Mit dem Beginn der anschließenden Spanabnahme (Fräsen) steigt die Temperatur in der Wechselwirkungszone zwischen Werkzeug 13 und Werkstück 17 zusätzlich.

Hochleistungswerkstoffe, wie beispielsweise Titan oder Titanbasislegierungen zeigen bei entsprechenden Temperaturen eine hohe Neigung zur Randschichtversprödung (alpha case). Die Versprödung beginnt oberhalb einer legierungsabhängigen Grenztemperatur und nimmt mit der Temperatur und der Expositionszeit zu (siehe Tabelle 2). Figur 6 zeigt schematisch am Beispiel eines Titanwerkstoffes, wie durch den geeigneten Einsatz eines kryogenen Kühlmittels die Temperatur in der Wechselwirkungszone unterhalb der Oxidationstemperatur gehalten wird (siehe Tabelle 2). Bei Bedarf kann die Wirksamkeit durch die Verwendung eines kryogenen Inertgases weiter gesteigert werden.

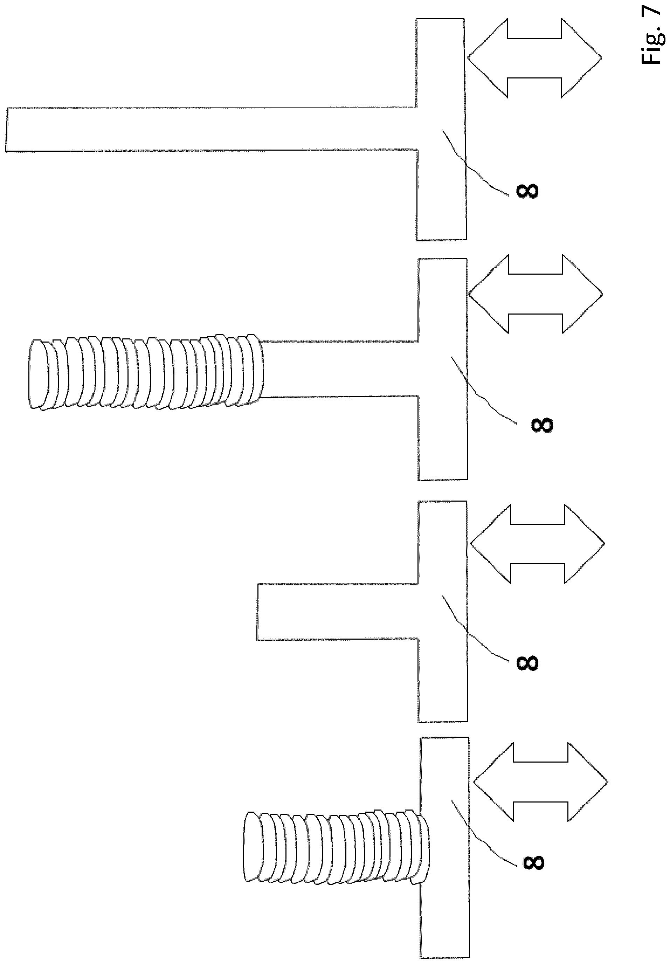

Figur 7 zeigt ein Werkstück in verschiedenen Bearbeitungsstufen. In der ganz linken Darstellung sind mehrere Schichten eines Zusatzwerkstoffes durch Laserauftragsschweißen übereinander angeordnet aufgetragen worden. In der nach rechts folgenden Darstellung sind die Oberflächen des aufgetragenen Zusatzwerkstoffes durch spanende Bearbeitung geglättet worden. In der nach rechts darauf folgenden Darstellung sind weitere Schichten auf die oberste bereits geglättete Oberfläche übereinander aufgetragen worden. In der ganz rechten Darstellung von Figur 7 sind alle aufgetragenen Oberflächen spanend geglättet und auf das gewünschte Maß gebracht worden.

Aufgrund des auf die Zwischenbearbeitung folgenden, erneuten lagenweisen additiven Werkstoffaufbaus mit dem Zusatzwerkstoff ergeben sich zusätzliche Restriktionen für das potenzielle Kühlmittel da die Oberfläche metallisch blank und frei von Fett, Schmutz oder Rost sein muss. Hierdurch scheiden konventionelle Kühlmittel aus. Zur Veranschaulichung ist die generelle Vorgehensweise in Figur 7 am Beispiel des segmentierten Aufbaus eines Steges dargestellt. Dies ist jedoch für beliebige zwei- und dreidimensionale Geometrien als allgemeingültig anzusehen. Wesentlich ist es hierbei, dass die Fräsbearbeitung auf einem Substrat 8 und/oder einem bereits generierten mit dem Zusatzwerkstoff gebildeten Segment beginnt und im Anschluss ohne Zwischenreinigung ein erneuter Auftrag erfolgen kann.

## Patentansprüche

1. Verfahren zur Beeinflussung der Mikrostruktur eines Zusatzwerkstoffgefüges eines Zusatzwerkstoffs, der beim schichtweisen Laserauftragsschweißen auf ein Substrat oder mindestens einer bereits aufgebrachten Schicht des Zusatzwerkstoffs und/oder der Vermeidung einer Randzonenversprödung von dabei aufgetragenem Zusatzwerkstoff, bei dem
Zusatzwerkstoff schichtförmig durch Aufschmelzen mit der Energie eines Laserstrahls aufgeschmolzen und mit Ausbildung einer Schicht auf einer Substratoberfläche oder einer Oberfläche einer bereits erstarrten mit dem Zusatzwerkstoff gebildeten Schicht ein kryogenes Gas (2) allein oder ein kryogenes Gas (2) mit einem Inertgas oder einem reaktiven Gas als Gasgemisch gerichtet wird;
und/oder
während einer spanenden Bearbeitung an Oberflächen einer oder mehrerer mit dem Zusatzwerkstoff gebildeter Schicht(en) auf die Oberfläche ein kryogenes Gas (2) allein oder ein kryogenes Gas (2) mit einem Inertgas oder einem reaktiven Gas als Gasgemisch gerichtet wird;
und dabei
die mit dem kryogenen Gas (2) oder dem Gasgemisch bestrahlte Größe der Oberfläche und/oder der dabei eingesetzte Volumenstrom in Abhängigkeit der momentanen Temperaturdifferenz zwischen dem Substratwerkstoff und dem Zusatzwerkstoff einer auf der Substratoberfläche ausgebildeten Schicht oder
in Abhängigkeit der momentanen Temperaturdifferenz zwischen dem zuletzt aufgetragenen Zusatzwerkstoff und bereits erstarrtem und kristallisiertem Zusatzwerkstoff mindestens einer vorab aufgetragenen Schicht geregelt wird.

2. Verfahren nach Anspruch 1, **dadurch gekennzeichnet, dass** die Erstarrungsgeschwindigkeit des aufgetragenen Zusatzwerkstoffs beeinflusst wird.

3. Verfahren nach Anspruch 1 oder 2, **dadurch gekennzeichnet, dass** die mit dem kryogenen Gas (2) oder dem Gasgemisch beeinflusste Größe der Oberfläche verkleinert und/oder der Volumenstrom vergrößert wird, um stängelkristallin orientierte Kristallite im Gefüge des aufgetragenen Zusatzwerkstoffs auszubilden.

4. Verfahren nach einem der vorhergehenden Ansprüche, **dadurch gekennzeichnet, dass** die stängelkristallin orientierte Kristallite dendritisch, zellular oder planar ausgebildet werden.

5. Verfahren nach Anspruch 1, **dadurch gekennzeichnet, dass** eine spanende Bearbeitung an Oberflächen von aufgetragenem und erstarrtem Zusatzwerkstoff nach dem Auftrag einer Schicht oder dem Auftrag von maximal zwanzig nacheinander und übereinander ausgebildeten Schichten durchgeführt wird.

6. Verfahren nach einem der vorhergehenden Ansprüche, **dadurch gekennzeichnet, dass** als kryogenes Gas (2) Helium, Wasserstoff, Stickstoff, Argon, Fluor, Sauerstoff oder sublimiertes Trockeneis eingesetzt wird.
